# EUROPÄISCHE PATENTANMELDUNG

(11) **EP 0 642 091 A2**
(43) Veröffentlichungstag der Anmeldung: **08.03.1995**
(21) Anmeldenummer: 94810484.9
(22) Anmeldetag: 24.08.1994
(51) Int. Cl.: G06F 17/28, G06F 15/02

(54) **Elektronisches Übersetzungsgerät**

(30) Priorität: 07.09.1993 CH 2656/93
(71) Anmelder: Hugentobler, Max, CH-8052 Zürich (CH)
(72) Erfinder: Hugentobler, Max, CH-8052 Zürich (CH)
(74) Vertreter: Feldmann, Clarence Paul

(57) **Zusammenfassung**

Ein transportables elektronisches Uebersetzungsgerät weist eine Eingabeeinheit (2), einen mehrzeiligen Display (3) und mindestens eine Speichereinheit auf. Die Eingabeeineheit (2) besitzt eine Speichertaste (4), mittels der der Benützer Wörter, Satzfragmente oder Sätze und ihre Uebersetzungen in mindestens eine Sprache abspeichern kann. Dadurch kann das Gerät als Lernhilfe für Sprachschüler verwendet werden, die ihren jeweiligen Lernfortschritt in das Gerät abspeichern und durch Eingabe des bereits gespeicherten Wortes in einer Sprache die entsprechende Uebersetzung erhalten, die sie so memorieren können.

## Beschreibung

Die vorliegende Erfindung betrifft ein portables elektronisches Uebersetzungsgerät mit einer Eingabeeinheit, einem mehrzeiligen Display und mindestens einer Speichereinheit.

Es sind verschiedene elektronische Uebersetzungsgeräte bekannt, die Diktionäre in Buchform ersetzen. US-A-4'159'536 zeigt ein derartiges portables elektronisches Uebersetzungsgerät. Ueber eine Tastatur wird das zu übersetzende Wort eingegeben. Mittels einem Mikroprozessor wird das eingegebene Wort mit dem Speicherinhalt verglichen. Ist es im Speicher vorhanden, so wird die dazugehörige, ebenfalls abgespeicherte Uebersetzung des Wortes auf einem Display angezeigt. Der verwendete Speicher kann nur gelesen werden, da es sich um einen ROM-Speicher handelt.

DE-A-29'46'856 offenbart ebenfalls ein Uebersetzungsgerät, das auf ähnliche Weise arbeitet. Dieses ermöglicht aber zudem eine phonetische Wiedergabe des eingebenen, beziehungsweise des übersetzten Wortes. Die Wiedergabe kann akustisch mittels einem Lautsprecher erfolgen. Ebenso ist eine optische Wiedergabe mittels dem Display möglich.

Diese bekannten Uebersetzungsgeräte werden anstelle eines Wörterbuches verwendet. Sie weisen gegenüber den Wörterbüchern mehrere Vorteile auf. Da sie im allgemeinen die Grösse eines Taschenrechners aufweisen, also von kleiner und leichter Gestalt sind, können sie einfach in Handtasche oder Aktenkoffer verstaut und überall hin mitgenommen werden. Der Zugriff zu den einzelnen Wörtern erfolgt schneller als beim Wörterbuch, da der Suchvorgang vom Gerät übernommen wird. Der gespeicherte Inhalt des elektronischen Wörterbuches ist jedoch für den Benützer nicht veränderbar.

Die vorliegende Erfindung hat sich nun zur Aufgabe gestellt, eine Uebersetzungshilfe zu schaffen, das die oben erwähnten Vorteile aufweist, das aber auch als Lernhilfe einsetzbar ist.

Diese Aufgabe löst ein elektronisches Uebersetzungsgerät gemäss Oberbegriff des Patentanspruches 1, das dadurch gekennzeichnet ist, dass die Eingabeeinheit eine Speichertaste aufweist, mittels der über die Eingabeeinheit eingegebene Wörter, Satzfragmente oder Sätze in mindestens eine Speichereinheit speicherbar sind und dass die eingegebenen Wörter, Satzfragmente oder Sätze, die in mindestens zwei Sprachen vorliegen, mittels Identifikationstasten der Eingabeeinheit einem mit der jeweiligen Sprache identifizierbaren Speicherplatz zuordnungsbar sind.

Die Erfindung ist also ein Uebersetzungsgerät, das wie die bekannten elektronischen Wörterbücher eingegebene Wörter mit bereits gespeicherten Wörtern vergleicht und bei Uebereinstimmung die entsprechende Uebersetzung liefert. Das Uebersetzungsgerät ist aber nicht ein von Anfang an vollständiges Wörterbuch, sondern es wird im Verlaufe des Lernprozesses vom Schüler mit neuen Wörtern und deren Uebersetzungen gefüllt. Hierfür weist das Gerät eine Möglichkeit zur Speicherung der neu gelernten Wörter in Form einer Speichertaste auf. Das Gerät besitzt auch nicht wie die bekannten elektronischen Wörterbücher nur einen ROM-Speicher, sondern einen RAM-Speicher. Die neu eingegebenen Wörter können nun gemeinsam mit den bereits gespeicherten Daten regelmässig aufgerufen werden, um so das bereits Gelernte zu repetieren. Das erfindungsgemässe elektronische Uebersetzungsgerät dient also vorwiegend als Lernhilfe, mittels der der Schüler das bereits Gelernte memorieren kann. Das Gerät gewährleistet einen schnellen Zugriff zu allen gespeicherten Daten, wobei keine bestimmte Reihenfolge eingehalten werden muss. Der Schüler kann somit ein beliebiges Wort oder einen beliebigen Satz herauspicken und die entsprechende Uebersetzung abfragen. Zudem sind bereits eingegebene fehlerhafte Uebersetzungen jederzeit korrigierbar.

In den Zeichnungen ist ein Ausführungsbeispiel des Erfindungsgegenstandes dargestellt und in der nachfolgenden Beschreibung erläutert. Es zeigt:
- Figur 1: eine schematische Darstellung des elektronischen Uebersetzungsgerätes

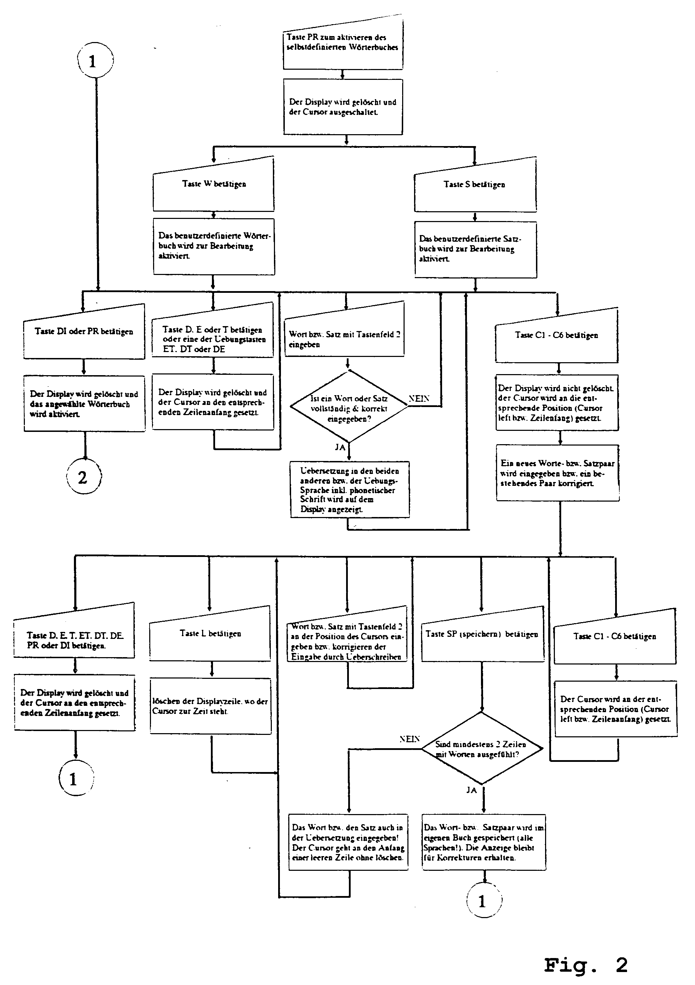

- Figur 2: ein Ablaufschema für die Bedienung des selbstdefinierten Wörterbuches

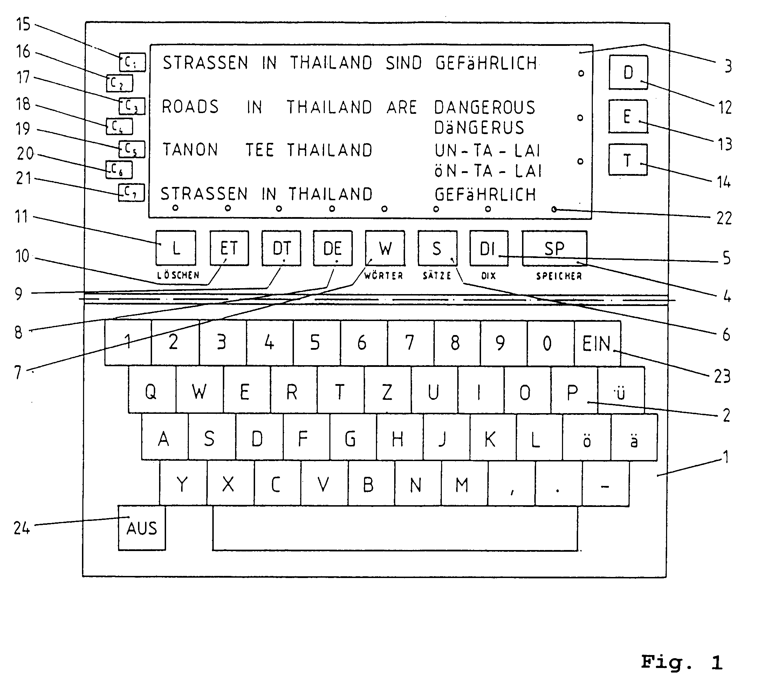

In Figur 1 ist das erfindungsgemässe elektronische Uebersetzungsgerät dargestellt. Es weist ein Gehäuse 1 auf, das in der dargestellten kompakten Ausführung durch ein Scharnier zweigeteilt ist und ähnlich einem Notebook oder Taschenrechner bei Nichtgebrauch zusammenklappbar ist. In einem Teil des Gehäuses 1 befindet sich ein Teil der Eingabeeinheit 2 in der Form der bekannten Schreibmaschinentastaturen. Als zusätzliche Tasten sind eine Einschalttaste 23 zum Einschalten des elektronischen Gerätes und eine Ausschalttaste 24 zum Ausschalten bei Nichtgebrauch vorhanden. In der anderen Hälfte des Gehäuses befindet sich ein Display 3, beispielsweise in Form einer LCD-Anzeige, der die eingegebenen oder aufgerufenen Wörter, Satzfragmente oder Sätze anzeigt. Der Display weist in diesem Beispiel sieben Zeilen à fünfzig Zeichen auf. Ebenfalls im zweiten Teil des Gerätes 1 befindet sich der restliche Teil der Eingabeeinheit 2, nämlich mehrere Funktionstasten und Identifikationstasten, die den Display 3 teilweise umrahmen. Mittels diesen Funktionstasten und Identifikationstasten wird das Gerät bedient, wobei ihre spezifische Bedeutung im folgenden erläutert wird.

Das Uebersetzungsgerät beinhaltet einerseits ein Wörterbuch, das bei der erstmaligen Inbetriebnahme durch den Schüler bereits in einem speziell hierfür vorgesehenen Speicher gespeichert ist. Dieses Wörterbuch, ein Diktionär für zwei Sprachen, wird also bereits bei der Herstellung des Gerätes integriert. In diesem Beispiel handelt es sich um einen Diktionär für die Uebersetzung von Wörtern oder Redewendungen vom Deutschen ins Englische und vom Englischen ins Deutsche. Dieser Diktionär kann wie bei den bekannten Uebersetzungsgeräten vom Benützer im allgemeinen nicht verändert werden. In diesem Beispiel ist jedoch eine spezielle Betriebsart vorgesehen, in der der Diktionär über die Tastatur geändert werden kann. Diese Betriebsart wird mit einem Sicherheitscode via Tastatur aktiviert.

Für den Gebrauch des Diktionärs ist eine Funktionstaste 5 vorgesehen. Die Bedienung des Diktionärs erfolgt analog zu den bekannten elektronischen Wörterbüchern. Wird die Funktionstaste 5 für das Wörterbuch gedrückt, so werden allfällig vorhandene Zeichen auf dem Display 3 gelöscht und der Cursor des Displays wird an den Zeilenanfang der ersten Zeile gesetzt. Der Benützer kann nun das gewünschte Wort oder die gewünschte Redewendung in einer Sprache, Deutsch oder Englisch, eingeben. In dieser Ausführungsform muss der Benützer vor der Eingabe jedoch eine Identifikationstaste für die verwendete Sprache betätigen. Die Identifikationstaste 12 kennzeichnet, dass die nachfolgende Eingabe eines Wortes in deutscher Sprache erfolgt, die Identifikationstaste 13 kennzeichnet die englische Sprache. Wird die Identifikationstaste 13 für Englisch gedrückt, so wird der Cursor des Displays 3 auf den Anfang der dritten Zeile gesetzt, wo die Eingabe erfolgt. Jeder Sprache ist somit auch eine bestimmte Zeile des Displays zugeordnet. Erfolgt keine weitere Eingabe und ist das eingegebene Wort im Speicher vorhanden, so wird das entsprechende übersetzte Wort in der der entsprechenden Sprache zugeordneten Zeile angezeigt. Für die deutsche Sprache in der ersten und für die englische Sprache in der dritten.

Das erfindungsgemässe Uebersetzungsgerät weist nun aber noch weitere Speicher auf. Diese werden benötigt, damit der Benützer ein eigenes Wörterbuch und eigene Satzfragmente oder Sätze in den jeweiligen Sprachen abspeichern kann. Hierfür sind in diesem Beispiel im Gehäuse je eine Funtkionstaste 7 für den Wortspeicher und eine Funktionstaste 6 für den Satzspeicher vorhanden. Die Unterscheidung zwischen Wörtern und Sätzen erfolgt aus didaktischen Gründen. Sie ist jedoch vom Aufbau des Gerätes her nicht notwendig. Es ist grundsätzlich möglich, Wörter und Sätze in denselben Speicher abzuspeichern.
Wird eine der Funktionstasten 6,7 für das Wörter- oder das Satzbuch gedrückt, so wird das selbstdefinierte Wörter- oder Satzbuch des Uebersetzungsgerätes aktiviert. Mit Hilfe einer der eindeutig einer Sprache zuordnungsbaren Sprach-Identifikationstasten 12,13,14 gelangt der Cursor auf dem Display an den Anfang der entsprechenden Zeile. Die Uebersetzung erscheint, ähnlich wie beim integrierten Wörterbuch, wenn die Wörter oder Sätze vollständig eingegeben sind und das Gerät eine Uebereinstimmung mit bereits gespeicherten Daten findet. Mittels von Funktionstasten 8,9,10 kann die Sprache gewählt werden, in die übersetzt werden soll. Wird keine derartige Funktionstaste 8,9,10 gewählt, so erscheinen die Uebersetzungen in allen eingegebenen Sprachen. In diesem Ausführungsbeispiel ist das Uebersetzungsgerät für drei Sprachen konzipiert: Deutsch, Englisch und Thai. Englisch dient als Hilfssprache, da davon ausgegangen wird, dass die meisten Thai-Lehrer kein Deutsch beherrschen, aber sicherlich die englische Sprache verstehen. Die Funktionstaste 8 aktiviert die Uebersetzung Deutsch/Englisch, die Funktionstaste 9 Deutsch/Thai und die Funktionstaste 10 Englisch/Thai. Die Sprachidentifikationstaste 12 ist der Sprache Deutsch zugeordnet, die Taste 13 Englisch und die Taste 14 Thai.

Ist das eingegebene Wort oder der eingegebene Satz dem Gerät noch nicht bekannt, das heisst nicht abgespeichert, so kann der Benutzer die entsprechende Uebersetzung selber eingeben. Damit das Wort in die zur entsprechenden Sprache zugehörigen Zeile eingegeben werden kann, weist die Eingabeeinheit 2 Cursortasten 15,16,17,18,19,20,21 auf, mit deren Hilfe der Cursor auf dem Display an die gewünschte Stelle bringbar ist. Die neue Eingabe ist mittels einer Speichertaste 4 der Eingabeeinheit 2 in den gewählten Satz- oder Wortspeicher speicherbar. Mit Hilfe der Identifikationstasten 12,13,14 für die jeweilige Sprache ist somit jedes neu vom Benützer über die Eingabeeinheit 2 eingegebene Wort, Satzfragment oder jeder Satz einem der jeweiligen Sprache eindeutig identifizierbaren Speicherplatz zugeordnet. Bei einer späteren Eingabe des Wortes in einer der drei Sprachen wird somit die entsprechende, vom Schüler eingegebene Uebersetzung auf dem Display angezeigt.

In diesem Ausführungsbeispiel sind auf dem Display 3 jeweils zwei Zeilen für eine Sprache vorgesehen. In die jeweils zweite Zeile sind phonetische Angaben eingebbar und anzeigbar. Der Benützer kann diese phonetischen Angaben je nach Wunsch eingeben und verändern, wobei er diese Zeilen auch leer belassen kann. Für die phonetischen Angaben wird vorzugsweise die lateinische Schrift verwendet.

Die in diesem Display 3 vorhandene siebente Zeile dient der Darstellung des Satzaufbaues. In diese Zeile kann die wörtliche Uebersetzung des Thai-Satzes auf Deutsch eingegeben beziehungsweise angezeigt werden, so dass die andersartige Satzstellung der fremden Sprache sichtbar wird.

Das Uebersetzungsgerät weist zusätzlich eine Löschtaste 11 auf, mittels der bereits eingegebene Daten veränderbar und löschbar sind. Dabei sind jeweils nur die im Display angezeigten Wörter, Sätze oder Satzfragmente veränderbar. Der Benützer kann also jederzeit seine eingegebene Datenmenge beeinflussen.

Das Gerät weist ferner Anzeigeelemente 22 auf, die den Benützer darüber informieren, welche Funktionstaste oder Identifikationstaste er aktiviert hat. Diese Anzeigeelemente 22 befinden sich jeweils in der Nähe der entsprechenden Funktionstaste. In diesem Beispiel sind sie im Display 3 angeordnet.

In einer bevorzugten Ausführungsform des Uebersetzungsgerätes schaltet das Gerät bei Nichtgebrauch nach einer definierten Zeitspanne automatisch ab.
In einer weiteren Ausführungsform kann das als Taschenmodell gestaltete Gerät seine gespeicherten Daten drahtlos mittels einem Infrarot-Link an ein anderes Gerät übermitteln oder von einem anderen Gerät empfangen.

Das erfindungsgemässe Uebersetzungsgerät dient somit als Lernhilfe für Sprachschüler. Sie können ihren jeweiligen Lernfortschritt im Gerät abspeichern und regelmässig repetieren. Da das Gerät handlich ist, kann es überall hin mitgenommen werden. Da der Zugriff auf die gespeicherten Uebersetzungen nicht in regelmässiger Reihenfolge erfolgt, werden vorallem die meistbenötigten Wörter und Sätze repetiert. Dies geschieht im Gegensatz zu der Verwendung von Lehrbüchern, wo meist vorallem die auf der vordersten Seiten befindlichen Angaben memoriert werden.

## Patentansprüche

1. Portables elektronisches Uebersetzungsgerät mit einer Eingabeeinheit (2), einem mehrzeiligen Display (3) und mindestens einer Speichereinheit, dadurch gekennzeichnet, dass die Eingabeeinheit (2) eine Speichertaste (4) aufweist, mittels der über die Eingabeeinheit (2) eingegebene Wörter, Satzfragmente oder Sätze in mindestens eine Speichereinheit speicherbar sind und dass die eingegebenen Wörter, Satzfragmente oder Sätze, die in mindestens zwei Sprachen vorliegen, mittels Identifikationstasten (12,13,14) der Eingabeeinheit (2) einem mit der jeweiligen Sprache identifizierbaren Speicherplatz zuordnungsbar sind.

2. Elektronisches Uebersetzungsgerät nach Anspruch 1, dadurch gekennzeichnet, dass die Eingabeeinheit (2) für jede Sprache, für die das Uebersetzungsgerät konzipiert ist, eine eindeutig zuordnungsbare Identifikationsstaste (12,13,14) aufweist.

3. Elektronisches Uebersetzungsgerät nach Anspruch 1, dadurch gekennzeichnet, dass die Eingabeeinheit (2) Funktionstasten (6,7) aufweist, mittels denen Wörter und Sätze in voneinander getrennten Speichern speicherbar sind.

4. Elektronisches Uebersetzungsgerät nach Anspruch 2, dadurch gekennzeichnet, dass pro Sprache mindestens zwei Display-Zeilen vorhanden sind, wobei in die jeweils zweite Zeile phonetische Angaben eingebbar und anzeigbar sind.

5. Elektronisches Uebersetzungsgerät nach Anspruch 4, dadurch gekennzeichnet, dass es für drei Sprachen konzipiert ist.

6. Elektronisches Uebersetzungsgerät nach Anspruch 1, dadurch gekennzeichnet, dass ein Speicher ein Wörterbuch für zwei der Sprachen enthält, das über die Eingabeeinheit (2) durch Aktivierung einer dem Wörterbuch zugeordneten Funktionsstaste (5) und durch Eingabe eines Wortes in einer der zwei Sprachen abrufbar ist.

7. Elektronisches Uebersetzungsgerät nach Anspruch 1, dadurch gekennzeichnet, dass auf der Eingabeeinheit (2) Funktionsstasten (8,9,10) vorhanden sind, um eingegebene Wörter, Satzfragmente oder Sätze mit den gespeicherten Daten einer Sprache zu vergleichen, so dass bei Uebereinstimmung die gespeicherte Uebersetzung in der durch die Funktionstaste (8,9,10) gewählten anderen Sprache auf dem Display (3) erscheint.

8. Elektronisches Uebersetzungsgerät nach Anspruch 1, dadurch gekennzeichnet, dass die Eingabeeinheit mindestens eine Löschtaste (11) aufweist, mittels der gespeicherte Daten löschbar sind.

9. Elektronisches Uebersetzungsgerät nach Anspruch 8, dadurch gekennzeichnet, dass jeweils nur die im Display (3) angezeigten Wörter, Satzfragmente oder Sätze löschbar sind.

10. Verwendung des elektronisches Uebersetzungsgerät nach einem der Ansprüche 1 bis 7, dadurch gekennzeichnet, dass es als Lernhilfe für Sprachschüler eingesetzt wird.
